# EUROPEAN PATENT APPLICATION

(11) **EP 1 108 864 A2**
(43) Date of publication of application: **20.06.2001**
(21) Application number: 00310867.7
(22) Date of filing: 07.12.2000
(51) Int. Cl.: F01N 3/22, F01N 3/033, F01N 3/035, F01N 3/28, F01N 3/08

(54) **Noise attenuating emission converter**

(30) Priority: 13.12.1999 US 460026
(71) Applicant: Ford Global Technologies, Inc., Dearborn, Michigan 48126 (US)
(72) Inventor: Rao, V Durga Nageswar, Bloomfield Twp., Michigan 48013 (US); Cikanek, Harry Arthur, Northville, Michigan 48167 (US); Watkins, William Lewis Henderson, Teledo, Ohio 43607 (US)
(74) Representative: Messulam, Alec Moses

(57) **Abstract**

An automotive exhaust gas noise attenuating device which treats exhaust gas emissions, the device having (a) a ceramic substrate for passing an automotive exhaust stream therethrough, the substrate having (i) an inlet face and an outlet face with a plurality of aligned thin porous channel walls defining channels extending between the faces, and (ii) a three dimensional aspect relationship where depth of the substrate between said faces is generally the same as either the height of width of a face, the substrate having first alternates of the channels blocked at the outlet face and second alternates of the channels blocked at the inlet face to promote lateral flow through the porous walls between each first channel and a multiple of second alternate channels while permitting laminar flow within such channels; (b) hollow shell pellets packed into and trapped in at least some of the first alternate channels which cooperate to define porous Darcy flow surfaces therein; and (c) dolomitic carbonate and catalysing material on or in the surfaces of the channel walls and Darcy flow surfaces.

## Description

This invention relates to the technology of suppressing noise from the exhaust gases emitted from an automotive internal combustion engine, and more broadly to the technical field of emission converters which are placed in the automotive exhaust stream along with separate noise mufflers to convert the chemically noxious elements of such exhaust.

Conventional contemporary automotive exhaust gas converters employ a porous ceramic substrate with a plurality of parallel aligned channels extending between an inlet (front) face and an exit (back) face of the substrate. Although the channels allow the exhaust stream to flow straight through the substrate, the channel cross-sections are sufficiently small to permit some degree of gas particle reactions at the surface of the channel walls so that coatings on the channel walls can promote chemical catalysis and thereby oxidation or reduction of the noxious elements. However, the exhaust flow remains essentially laminar, passing straight through the substrate, with a boundary layer adhering to such walls. Low frequency vibrations of the exhaust gases have a wave length as long as or considerably longer than the length of such substrate channels; such frequencies are not effectively damped or attenuated. The substrate provides no abrupt change in the direction of flow which is necessary to attenuate the pressure waves carrying the sound. Separate sound muffling devices are still necessary. Some variations from straight-through monoliths have been proposed for purposes other than sound attenuation (see US patent 5,758,496)..

Conventional exhaust mufflers in automobiles are constructed with a maze of metallic walls forcing the exhaust stream through small openings and abrupt angle turns which cause the noise pressure transmission to be broken up and dissipate. The mufflers are designed to attenuate most of the sound waves in the audible range of 15-19,000 hertz.

Unfortunately, the cost of separate units for noise attenuation and chemical gas conversion is significant. There is much need for a device that would provide improved dual functions of noise attenuation and emission chemical conversion. One attempt to accomplish both tasks in a single device is disclosed in co-pending U.S. Application 09/412,442 filed October 4, 1999 by common inventors to this invention.

This invention seeks to provide an improved construction that achieves more effective noise attenuation and more efficient emission conversion.

According to the present invention, there is provided an automotive noise attenuating device having exhaust gas emission treating capabilities, comprising:
(a) a ceramic substrate for passing an automotive exhaust gas stream therethrough, said substrate having an inlet face and an outlet face with a plurality of aligned thin porous channel walls defining channels extending between said faces, said substrate having first alternates of said channels blocked at said outlet face and second alternates of said channels blocked at said inlet face to promote lateral flow through said porous walls between each first channel and a multiple of second alternate channels while permitting laminar flow within such channels;
(b) a plurality of hollow porous pellets packed into and trapped in at least some of said first alternate channels, the pellets co-operating to define Darcy flow surfaces therein; and
(c) dolomitic carbonate and catalysing material on or in the surfaces of said channel walls and Darcy flow surfaces.

An advantage of the preferred embodiment of the invention is that it not only provides for noise attenuation of the exhaust gas stream and chemical conversion of the noxious elements in such stream but also performs such functions with a lean burn gasoline or diesel engine to particularly convert NO_{X} while performing with enhanced conversion efficiency compared to the prior art.

A further advantage of the preferred embodiment of the invention, is that it provides a device which has less back pressure, thus allowing the engine, to which it is connected, to operate with greater responsiveness.

Preferably, the pellets have one or more of the following: a hollow interior with pellet wall pores sized and arranged to communicate with the pellet interior to enhance noise attenuation; a pellet shape that is irregular but sized to closely fit the hydraulic diameter of the cross sectional area of the channels; the pellets are constituted of etched gamma alumina to eliminate the need for an adhering washcoat between said dolomitic carbonate/ catalysing material and the pellet.

The device may advantageously use additional ceramic foam filters to trap significant soot separate from the substrate and provide augmentation of NOₓ conversion as well as better sound attenuation.

The invention will now be described further, by way of example, with reference to the accompanying drawings, in which:
Figure 1 is a schematic central elevational cross sectional view of one embodiment of the device of this invention;
Figure 2 is an exploded schematic perspective illustration of the elements of Figure 1;
Figure 3 is an enlarged sectional view of a portion of Figure 1 taken along line 3-3 thereof;
Figure 4 is a greatly enlarged sectional view of a portion of the porous channel walls through which lateral flow takes place, the view being taken along line 4-4 of Figure 3;
Figure 5 is a still further enlarged sectional view of a small portion of a channel wall showing the network of pores through which the lateral flow must pass;
Figure 6 is a central elevational cross sectional view of another embodiment of this invention;
Figure 7 is a highly enlarged sectional view of a portion of the substrate of Figure 7 taken substantially along line 7-7 thereof; and
Figure 8 is an exploded perspective view of the embodiment of Figure 7, employed as a close coupled structure with an internal combustion engine.

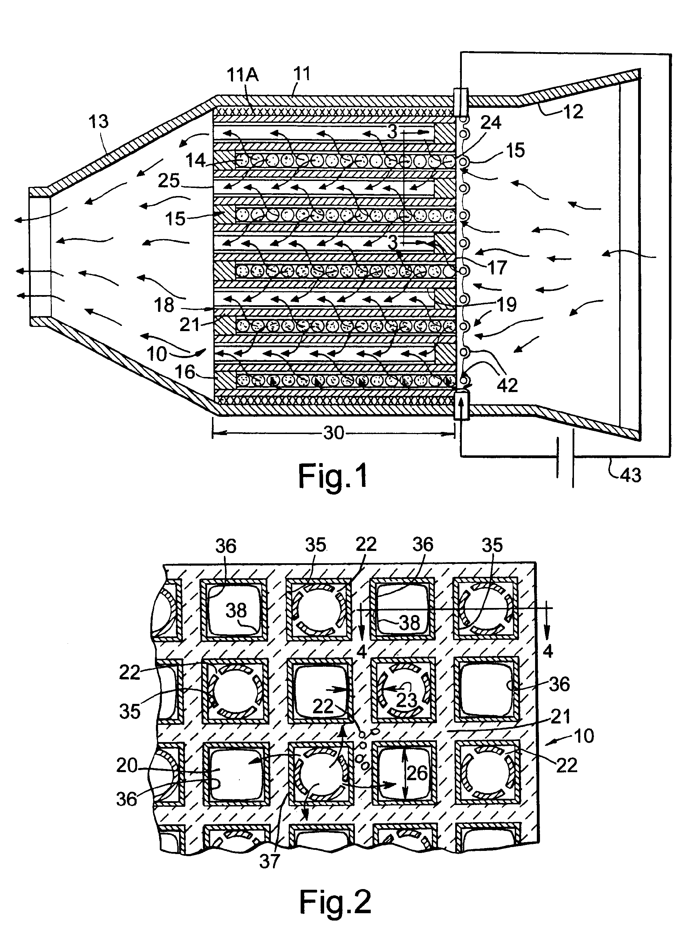

The device of this invention functions simultaneously to attenuate exhaust gas noise and to more effectively convert the noxious elements of the exhaust gases to harmless elements particularly from a lean burn gasoline engine or diesel engine. The embodiment of Figures 1-2 is comprised of the following principal elements: a multi-channelled substrate 10, canister 11 (carrying a Fibrefrax interior cushioning layer 11A) for supporting the substrate, inlet and outlet flow guides 12, 13, respectively, micro-sized pellets 14 filling at least certain of the substrate channels, and structural means 15 for trapping the pellets in the channels.

The substrate 10, as shown in Figures 1-3, comprises a high temperature ceramic monolith body constituted preferably of ceramic corderite [Mg Al₂ O₃ (SiO₂)₄] which has a minimum melting temperature of about 2250°F. The substrate 10 has parallel aligned inlet (frontal) face 17 and exit (trailing) face 18 between which extend a multitude of parallel narrow channels 19 having a micro-sized cross-sectional areas 20 that provide 25-200 cells per square inch. The channels 19 are defined by thin porous walls 21 having random pores 22 with a pore size in the range of 15-45 microns, a wall thickness 23 in the range of .010-.012 inches for 200 cells/in² and .022-.032 inches for 25 cell/in² , and a hydraulic diameter 26 of about .018-.200 inches. The channels 19 have a multitude of closely packed inlet cell openings 24 through the face 17 and similarly a multitude of closely spaced outlet cell openings 25 through the exit face 18. The selection of cell density provides a balance between reduced back pressure and increased surface area for catalytic reactions.

The substrate's monolithic body has a three-dimensional aspect relationship where the substrate depth 30 is generally the same as either its height 31 or width 32. Although the faces may have an elliptical or rectangular shape, the reference to height and width refer to the major axes of such shapes. Note how the short depth of the body (preferably about 4-6 inches or less), when compared to commercially available substrates, is at least one half the depth of such substrates. The frontal area and exit areas of the substrate thus are proportionately much greater, accompanied by a shallower depth. An equivalent treating volume is achieved with shorter channels promoting better noise attenuation with high catalytic conversion efficiency while at the same time reducing overall back pressure of the exhaust system to allow the engine to be more responsive. Advantageously, the three-dimensional relationships can be in the unit range of, for example, height 1.0-1.5, width 1.5-2.0, and depth 1.0-1.5. These three-dimensional aspect relationships are important to achieving reduced back pressure in conjunction with the reduced cell density of the faces while retaining ultra-thin walls.

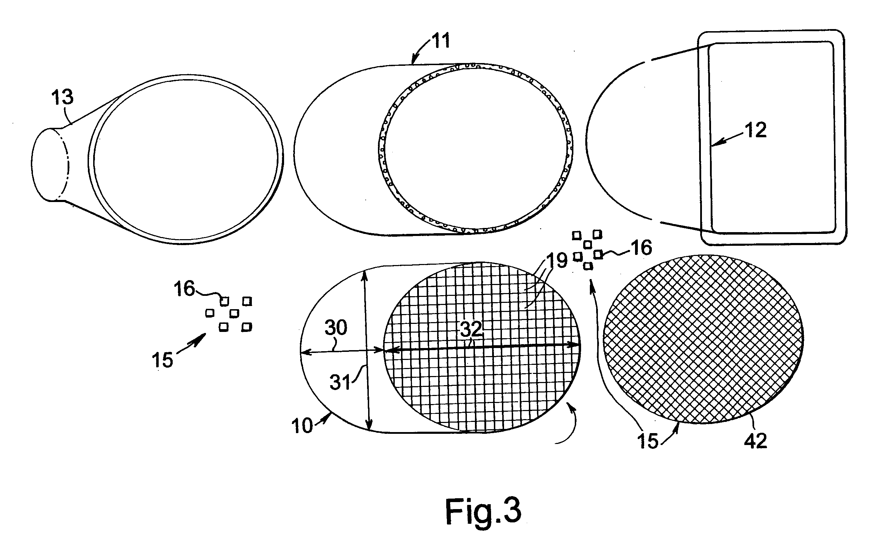

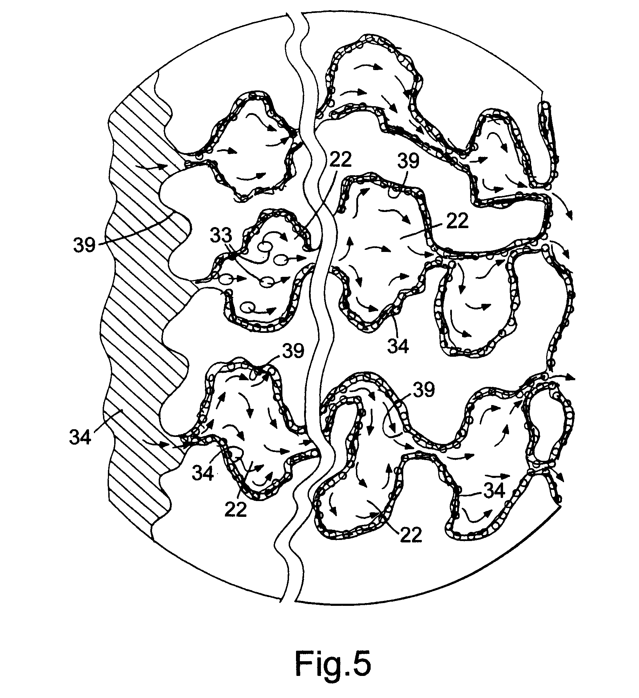

As shown in Figure 3, the honeycomb cellular-looking substrate 10 has first alternate channels 35 (inlet channels) blocked at the exit face 18 and second alternate channels 36 (outlet channels) blocked at the inlet face 17. This blocking is affected by non-porous ceramic plugging 16 (part of structural means 15) to force the normally straight-through flow to move laterally through the pores 22 of four radially adjacent channel walls 21 into such adjacent channels (from a first alternate channel 35 to the four adjacent alternate channel 36). Modified Laminar flow is present in the first alternate channels 35 with the boundary layer 38 substantially reduced by the presence of pellets 14. No longer can low frequency sound/pressure waves pass through the channels 19 with little or no attenuation. Such waves are altered not only by impingement with the plugs 16, but with the irregular internal surfaces 39 (Figure 5) defining the randomly oriented pores 22 within the channel walls. Gas flow chemical reactivity is increased because of the higher frequency of impingement of gas molecules 33 against surfaces 39 but also with catalysis coatings 34 on such surfaces 39, as well as coatings 37 lining the channel walls; such impingement is significantly increased in the inlet channels due to near elimination of the gas boundary layer 38 normally restraining impingement. Flow 40 through the porous walls 21 is of a labyrinthine character forcing increased impingement with the surfaces 39 in order to pass therethrough.

The pellets 14 fill at least certain of the channels 19, here first alternate channels 35. The pellets 14 are comprised of irregular or spherical micro-sized particles having a mean diameter of about .2-.05 inches that approximate the common interior hydraulic diameter 26 of the channels. The pellets are constituted of a ceramic material that resists high temperature at a minimum of 2250°F. Such material is preferably selected from the group consisting of ceramic corderite, gamma alumina, dolomite, barium oxide, and calcium oxide. The pellets are formed with hollow interiors 46 and have pores 47 in thin sphere-like walls 48 to permit exhaust gas noise waves to be broken and altered as the exhaust gases 49 enter into and out of such pellet interior. Although a single row of pellets is illustrated as occupying the inlet channels 35 and generally tangent to opposite sides of the inlet channels, it is important that the plurality of pellets, regardless of size, do fill up and pack tightly within the channel to avoid attrition induced by the gas flow and properly define the Darcy flow surfaces. The pellets define average interstitial spaces 60 with the channel wall surfaces 27; spaces 60 can be generally about 500 microns in width and leave about a 30% open channel space. Note that the interstitial spaces 60 along the channel walls, except for minute interruptions by tangential contact of the pellets 14 at contact points 28 with the wall surface 27, permits a modified laminar flow with a highly degraded boundary layer 38. Exhaust gas flow 49 through the inlet channels is thereby modified to retain some aspect of laminar flow, but adds a flow characteristic called "Darcy flow". Darcy had originally developed mathematical equations describing diffusion flow through a porous medium that substantially reduced or eliminated the boundary layer of laminar flow. Darcy flow thus refers to a flow that proceeds through a labyrinth of undulating or randomly arranged surfaces 29 (hereinafter Darcy flow surfaces) which includes the interior and exterior surfaces of the pellets as well as the porous surfaces 39 of the walls 21. The Darcy flow surfaces tend to increase the back pressure of the exhaust gas flow while increasing the attenuation of noise and significantly increasing the impingement frequency of gas molecules 33 with any reaction promoting catalyst coating 34 on the substrate walls 27 or on the Darcy flow surfaces 29. The gaseous reaction rate will be 2-3 orders of magnitude greater than conventional laminar flow substrates, which more than offsets any disadvantages arising from increased back pressures. It is important to recognise that an increase in the exhaust gas back pressure has been offset by using a shorter depth 30 substrate, as indicated earlier and by the elimination of the need for a separate muffler.

Successful noise attenuation is achieved by the non-through channels 19, Darcy flow surfaces 29 (in both the channel walls as well as in the channel spaces occupied in part by the pellets), which together bend and rejoin the pressure waves of sound, including the porous, hollow pellet flow pattern.

To retain the granular pellets in their respective channels, trapping means 15 comprises both a screen 42 and non-porous ceramic plugs 16. Screen 42 is comprised of stainless steel wire mesh and is tightly stationed to cover the inlet face 17; the screen wire has a mesh which is sufficiently small to cross and secure the pellets grains within the ceramic channels but sufficiently large to provide maximum flow therethrough with minimum back pressure. Accordingly, the mesh size of such screen is about 100 mesh (about 75% of the smallest pellet diameter). Screen 42 is connected to an electrical circuit 43 (12-volt or 42-volt) to provide 100-150 watts of selective resistance heating for rapidly heating exhaust gases from a cold-start engine that enter the substrate through such screen 50. This quickly raises the exhaust gas temperature to a catalyst light-off temperature of at least 250°C.

Coatings are impregnated or deposited on the substrate and pellets to carry out catalysis of the exhaust gases. Substrate 10 may be coated with a conventional washcoat and precious metal loading 37, the washcoat comprising ceria and precious metal serving to catalyse oxidation or promote a three-way catalyst function. Preferably, the previous metal loading is selected from the group of palladium, platinum, and rhodium, and loaded in an amount of about 120 grams/ft³, which is approximately one-half the normal precious metal loading used in a conventional catalyst for a given size.

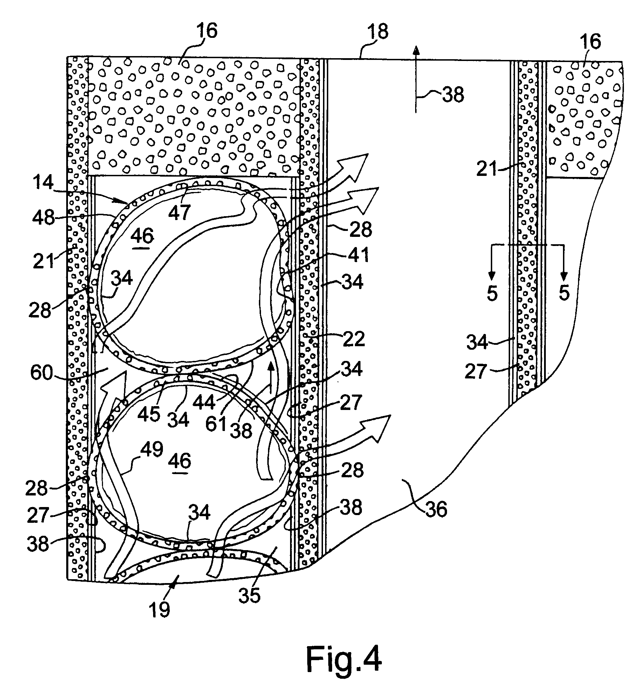

The solid pellets 14 are preferably made by atomising particles from a melt followed by screening of the solid particles to size. Porous, hollow pellets may be made by coating atomised polystyrene particles with ceramic and then firing the coated particles to remove the polystyrene thereby resulting in hollow pellets 44 (see Figure 4) having a porous thin shell 45. The final sized pellets are preferably washed in warm water followed by an etching for 10-15 seconds with hydrofluoric acid (5% solution) in the case of corderite pellets, or with potassium hydroxide (20% solution) in the case of gamma alumina pellets (the gamma alumina pellets can be coated without etching).

Most importantly, dolomitic carbonate is placed on or in the walls of the pellets and substrate to enhance noise attenuation as well as gas conversion accompanied by NOₓ absorption/adsorption. Because dolomite lacks any vitreous phase that would normally transmit noise, it contributes to the noise attenuation. Dolomite, in its mineral form, is analogous to marble, which lacks a vitreous phase and is an excellent blocker of noise by conduction. Dolomitic carbonate is also very desirable for engine applications because it does not burn under 2700 degrees F. and thus will not destroy the catalysis coating in the event of engine misfiring. With corderite or mullite as conventional substrate materials, they will melt or burn at 2200 degrees F. or less. Dolomite instead, at 2200-2700 degrees F., will break down and release CO₂ while producing MgO equivalent to desirable calcined dolomite.

The pellets, after etching, are desirably coated at 34 with dolomitic carbonate (or additionally an alkali earth metal oxide) to act as an absorber/adsorber of NOₓ, as well as coated with a precious metal catalysing material. A particularly unique NOₓ absorber/adsorber is dolomitic carbonate, which results in considerably reduced precious metal loading as well as significant enhancement in the conversion of NOₓ when used with a lean burn gasoline engine or diesel engine for emission conversion. The use of dolomite allows chemical reactions within the substrate to take place on a continuous or semicontinuous basis without frequent engine throttling and without the need to stage the oxygen content of the exhaust gas from lean to rich conditions to make the absorber/adsorber work.

The overall combination of dolomitic carbonate as a NOₓ absorber/adsorber and the laminar/Darcy flow, results in significant enhancement in conversion of NOₓ in a lean burn gasoline engine or diesel exhaust at considerably reduced precious metal loading requirements. The chemical reactions that take place in the exhaust with this type of purification device can function without special engine control which has heretofore been required, such as mandated movement from a lean engine exhaust condition to a rich engine exhaust condition to produce CO and HC to induce conversion of NOₓ. Conversion thus can take place without frequent throttling or without the need to stage from lean to rich conditions.

Pellets may also be alternatively be placed in the outlet channels 36; in the embodiment of Figure 1, there is no need to impregnate the outlet channels 36 with a washcoat or precious metal loading. Such coating would decrease the hydraulic diameter of the outlet channels and may not be necessary to attenuate noise or convert emissions while assisting in the reduction of back pressure. If the outlet channels do contain pellets, the outlet channel walls should also be coated with dolomitic carbonate and precious metal.

In operation and at cold start for a lean burn gasoline engine, the electrically heated screen 42 permits exhaust gas light-off to initiate hydrocarbon and carbon monoxide conversion within seconds of the start. Since the engine exhaust start is considerably rich, very little NOₓ is produced. Coated pellets 14 and the porous channel wall surfaces 27 absorb/adsorb excess HC in the rich exhaust, due to much cooler gas temperature. As the rapidly heated exhaust gases enter the substrate, they undergo high frequency molecular impingement against the inlet channel walls as well as high frequency molecular impingement against the increased surface area of the pellets by the Darcy flow. The undulating additional surface area provided by the pellets contributes significantly to such increase in impingement frequency and causes the catalyst conversion efficiency to be vastly improved while reducing the amount of precious metal needed to effect conversion.

In the early stages of gasoline engine start-up, the initial reactions will be much like those in a conventional three-way catalyst. However, once lean burn conditions are attained with an oxygen rich exhaust, the dolomitic carbonate pellets function in a very unique manner to absorb/adsorb NOₓ and provide high conversion efficiency of the NOₓ as well as HC and CO compared to conventional catalyst systems. Dolomite does not reach a NOₓ saturation point because it facilitates continuous, or at least semicontinuous conversion of NOₓ all the time. Dolomitic carbonate, on and in the pellets, functions not only to absorb/adsorb NOₓ but reacts with the excess oxygen in the presence of platinum or palladium to form nitrites and CO₂ or H₂O. The nitrites may also react with CO or HC and O₂ in the exhaust gas to form some nitrates or carbonates (see Table I). Then, during normal accelerations, a decrease in oxygen accompanied by an increase in CO converts the nitrates to carbonates, thus continuing the catalysis of NOₓ. Even in a continuous oxygen rich exhaust, there is a three-way cleansing of the exhaust by use of the present invention. CO and HC react to reduce nitrites to N₂ and H₂ O and form more carbonates which started the reaction. Only a minor proportion of the nitrites react with oxygen to form nitrates which will be converted during normal engine accelerations.

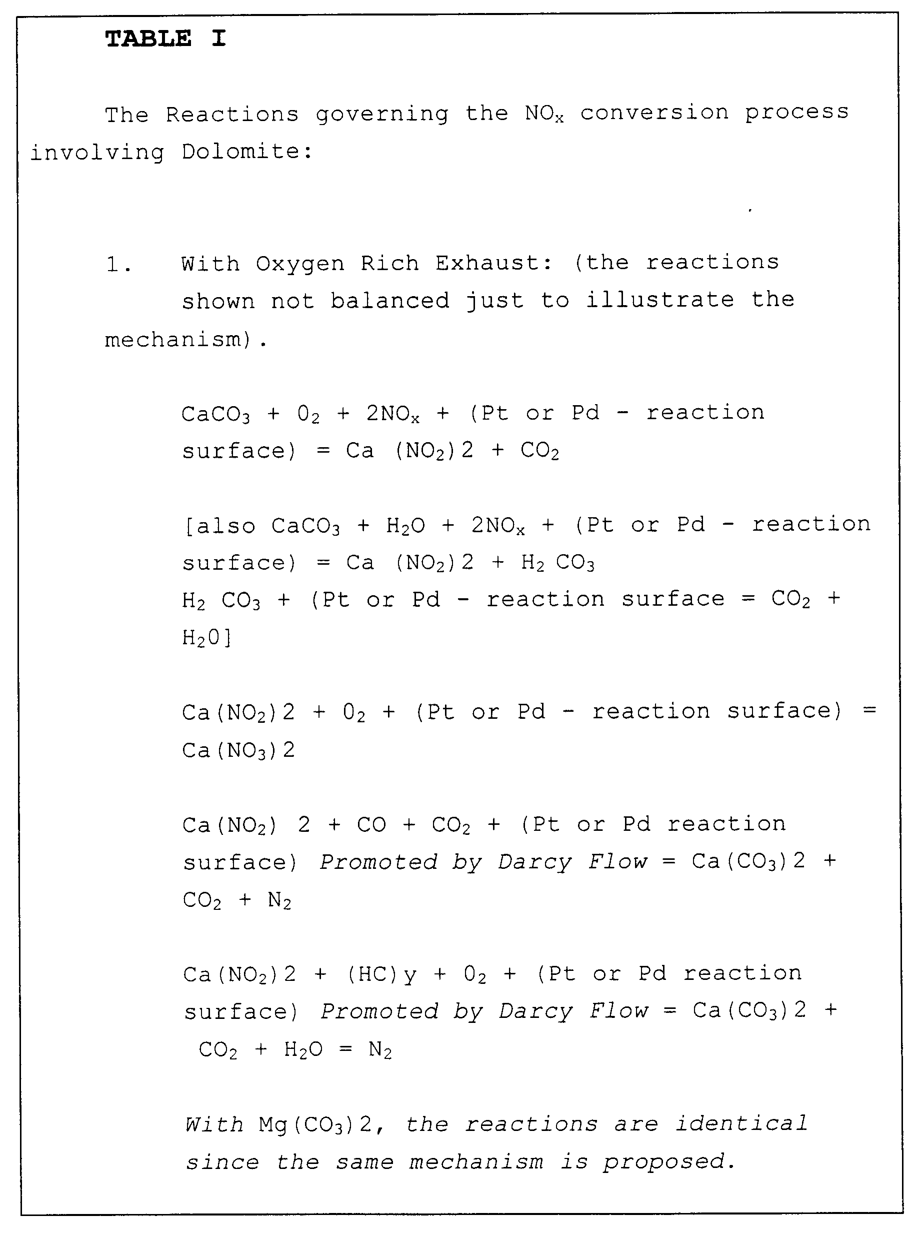

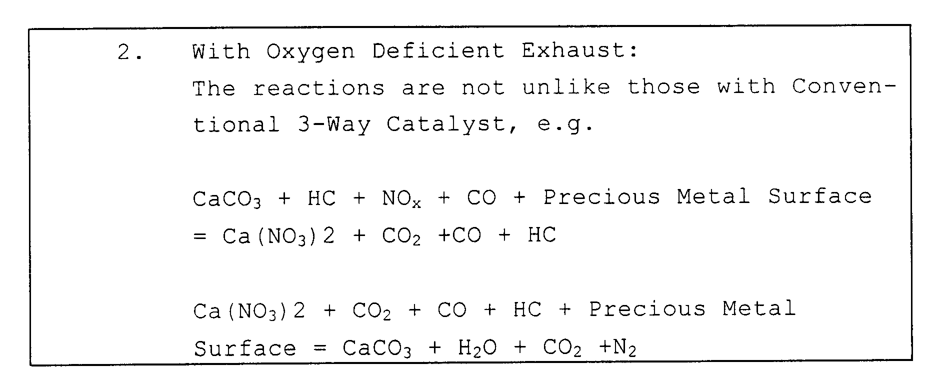

Dolomite is a naturally occurring solid solution of CaCO₃, and MgCO₃ and as such does not contain any free MgO and/or CaO unless calcined at a temperature well above 1500°F (850°C). But even when calcined, the calcined dolomite becomes a CaO-MgO solid solution with reaction characteristics significantly different from either pure CaO or MgO or the mechanical mixture of the two as used in prior art catalyst systems. Dolomite solid solutions possess the affinity for ion exchange with stronger acid radicals such as SO₃, SO₄, NO₃, etc., even in the presence of water vapour and CO₂ which occur in gaseous environments such as exhaust gases. This particular characteristic of the carbonates in solid solution is important to achieving significant reduction of NO_{X} from an internal combustion engine exhaust as explained by the chemical reactions. The compound so-formed, particularly the nitrites and the nitrates, are readily oxidised by the CO and HC in the proximity/presence of a precious metal catalyst such as palladium or platinum. The process is augmented by in situ CO₂, which is always present; the corresponding ion exchange results in the carbonates being formed again to yield continuous/semi-continuous removal of NOₓ without the need to have a rich-lean engine regime or operation mandated.

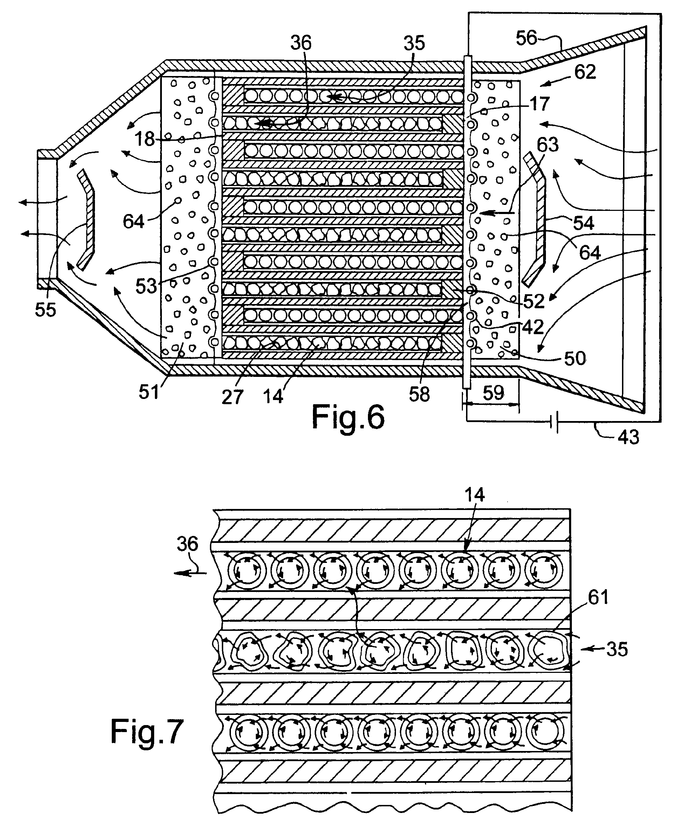

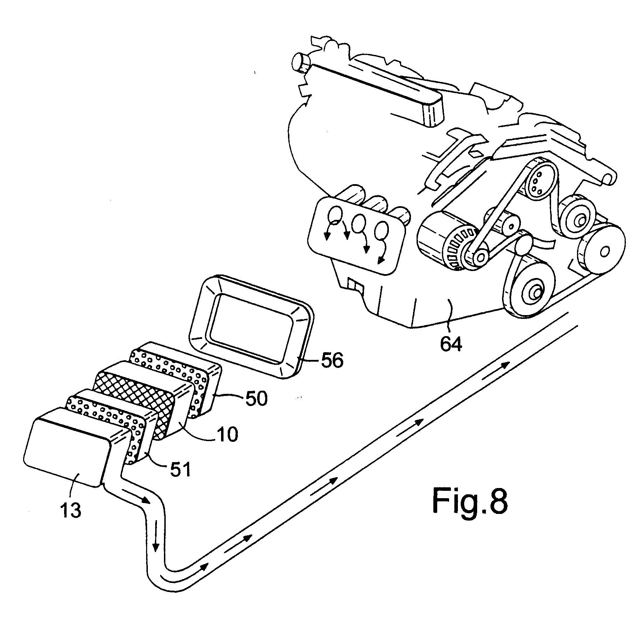

As shown in Figures 6-8, an embodiment is illustrated that exhibits how the noise attenuation/catalyst device of this invention can be used in a position that is close coupled to a diesel engine 64. Certain features are added to the substrate previously described, including the following features: converging inlet cone 56, hollow porous pellets 14 in the outlet channels 36; a screen 53 extending across the outlet face 18 to enclose the additional pellets in the outlet channels 36 at one end and non-porous ceramic plugs 52 closing off the other end of each such channel 36, ceramic foam filters 50, 51, respectively sandwiching the screens 53 and 42 against the substrate faces 18 and 17, respectively; and central flow deflector plates 54, 55 to assist gas inlet diffusion and gas outlet collection.

The foam filters 50, 51 serve a unique function in the close coupled muffler catalyst device. The ceramic foam has larger sized pores 64 (20-85 microns) than the substrate walls (10-45 microns) and has a pancake like structure with a depth of about 3/8-3/4 inches. The filters are given a coating which penetrates into their pores; such coating contains precious metal selected from the group of palladium and platinum with rhodium, loaded in a lesser amount of about 60-210 grams/ft³. The exhaust gases must pass first through the ceramic foam of the inlet filter 50 where unburned fuel and oil (particularly at cold engine start) are deposited and filtered out of the exhaust gas stream. The exhaust gas then enters substrate 10. At cold start conditions, the electrically heated screen 42 locally heats the inlet face 17 of the substrate and the rear face 58 of the filter 50 initially to immediately promote conversion of HC/CO. This also initiates oxidation of the unburned fuel and oil. ZTP or other fuel additives, that form a residue and poison the substrate, will be retained at the front end of the filter, thus avoiding substrate poisoning, while increasing substrate life during engine service. The pore size, pore distribution, and the filter thickness 59 of the ceramic foam filters are selected so that the build-up of these residues do not unduly impede or block the exhaust gas flow for the life of the vehicle. Fairly large pores having interconnected pore distribution should be selected for the ceramic foam so that the gas molecules will impinge the pore walls several times before exiting from the ceramic foam filter. Repeated impingements during cold starts produce wet deposits which promote rapid capture and deposition of the exhaust gas/borne unburned oil particulates.

In a diesel engine, considerable NOₓ is formed during the first peak combustion spike; there is little opportunity in the rest of the cycle to chemically change such NOₓ. During the second or diffusion combustion stage, little NOₓ is formed but such stage produces large amounts of oil/fuel saturated soot. Up to 90% of such soot is trapped or collected in foam filter 50 and inlet channels 35 and walls 21 of the substrate. But most unusual is the ability of the soot layer, and the combined ability of the NOₓ absorbing pellets to trap and hold NOₓ compounds until the soot is ignited during mild accelerations of the engine which creates a reducing atmosphere and raises the exhaust gas temperature to 500°F or greater causing such ignition. This consequent reducing atmosphere will promote the reduction of NOₓ analogous to 3-way catalysis. As the soot burns, NOₓ is released from the Darcy flow surfaces to be converted as earlier described by the dolomitic carbonate and precious metal loading. This provides even greater assurance that the NOₓ conversion will take place continuously or semi-continuously with no need to purge the substrate or filters by use of special control regimes.

Reactions involving the oxidation of HC and carbon soot on the pore surfaces facilitates NOₓ removal and significantly extends the substrate life by preventing absorption of GTP (thiophosphates). In addition to the conventional reaction involving the substrate wall surfaces, reactions are substantially increased due to the increased contact with the catalyst coating 61 of the pellets and surfaces 39 of the lateral flow walls. As the gas molecules move over, into and around the pellets 14, the molecular impingement rate with the pellet and channel walls is increased. Due to the minimisation of boundary layer, reaction rates are enhanced since there is less interference with contact of the gas molecules with the coatings. Combined with the additional reaction surface area provided by the pellet surfaces and the significantly increased impingement frequency, the catalyst substrate conversion efficiency is improved.

The flow diverter plate 54 encourages diffusion of the exhaust gas stream to migrate to the outer radial portion 62 of the foam filter 50 and substrate 10; and thence when within the substrate, the flow inherently migrates to the central core 63. This prevents unequal lengths of flow which cancels noise resulting from such unequal lengths. Without the diverter, considerable flow will tunnel through and create considerable friction between unequal flow paths and consequent noise. The diverter surprisingly reduces back pressure by about 50%. The flow diverter plate 55 at the neck of the outlet cone also serves to encourage the central flow from the substrate body to diverge and collect at such neck at a more uniform flow rate for all of the gas particles.

## Claims

1. An automotive noise attenuating device having exhaust gas emission treating capabilities, comprising:
(a) a ceramic substrate for passing an automotive exhaust gas stream therethrough, said substrate having an inlet face and an outlet face with a plurality of aligned thin porous channel walls defining channels extending between said faces, said substrate having first alternates of said channels blocked at said outlet face and second alternates of said channels blocked at said inlet face to promote lateral flow through said porous walls between each first channel and a multiple of second alternate channels while permitting laminar flow within such channels;
(b) a plurality of hollow porous pellets packed into and trapped in at least some of said first alternate channels, the pellets co-operating to define Darcy flow surfaces therein; and
(c) dolomitic carbonate and catalysing material on or in the surfaces of said channel walls and Darcy flow surfaces.

2. A device as claimed in claim 1, in which said pellets have a shell with a hollow interior and pores through said shell communicating with said interior to permit flow of exhaust gas into and out of said pellet interiors to attenuate noise of said exhaust gases.

3. A device as claimed in claim 2, in which said pellet pore size is in the range of 5-45 microns.

4. A device as claimed in any preceding claim, which further comprises one or more flow diverters placed adjacent a face of said substrate to cancel noise from unequal lengths of flow portions.

5. A device as claimed in any preceding claim, which further comprises porous ceramic foam filters disposed contiguously adjacent at least the inlet face of said substrate to attenuate noise and trap soot to enhance NOₓ conversion.

6. A device as claimed in claim 5, in which the pore size of said ceramic foam filters is 20-85 microns.

7. A device as claimed in any preceding claim, wherein said substrate has a three dimensional aspect relationship where the depth of the substrate between said faces is generally the same as either the height or width of a face, and in which said substrate has an inlet face with a cross-sectional area that is at least ten times greater than the cross-sectional area of said exhaust gas stream emitted from said engine.

8. A device as claimed in claim 7, in which said device has an inlet cone tapered to guide and diffuse pressure waves of said exhaust gases between said cross sectional areas.

9. A device as claimed in claim 7, in which said three-dimensional relationships have unit ratios of 1.0-1.5 for the height, 1.5-2.0 for the width, and 1.5-2.0 for the depth.

10. A device as claimed in claim 1, in which the density of said channels at said inlet face is in the range of 25-200 cells per square inch, and the thickness of said channel walls is in the range of .010-.032 inches.

11. A device as claimed in claim 1, in which said pellets are constructed of a material selected from the group comprising corderite, gamma aluminium, barium oxide, dolomite, and calcium oxide.

12. A device as claimed in claim 11, in which said Darcy flow surfaces are coated with one or more of platinum or platinum with rhodium to promote conversion of NOₓ.

13. A device as claimed in any preceding claim, in which said catalysing material has a precious metal selected from the group consisting of palladium, platinum, and rhodium.

14. A device as claimed in claim 13, in which the loading of said precious metal onto said substrate is in the range of 60-200 grams per cubic foot of surface.
